# EUROPEAN PATENT APPLICATION

(11) **EP 2 015 499 A2**
(43) Date of publication of application: **14.01.2009**
(21) Application number: 08157532.6
(22) Date of filing: 04.06.2008
(51) Int. Cl.: H04L 1/16

(54) **Retransmitting control method and transmitting device**

(30) Priority: 19.06.2007 JP 2007161593
(71) Applicant: Fujitsu Limited, Kawasaki-shi, Kanagawa 211-8588 (JP)
(72) Inventor: Tokita, Kouji c/o FUJITSU LIMITED, Kawasaki-shi, Kanagawa 211-8588 (JP)
(74) Representative: Stebbing, Timothy Charles

(57) **Abstract**

It is determined whether control data that a receiving device (2) has transmitted to a transmitting device (1) in response to reception of packetized data from the transmitting device (2) is normal data. If it is determined that the control data is not normal data, it is estimated whether response data included in the control data is acknowledgement response data (ACK) or negative acknowledgement response data (NACK). If it is determined that the control data is normal data and the response data included in the control data is NACK, or if it cannot be estimated that the response data included in the control data is ACK, the packetized data is retransmitted.

## Description

The retransmission control method and the transmitting device relate to a mobile communication system for performing retransmission control.

According to an aspect of the present invention, there is provided a retransmission control method comprising of the steps of: determining normality of control data responded to transmitted packetized data; estimating response data included in the control data to be acknowledgement response data (ACK) or negative acknowledgement response data (NACK) in case of determining the control data as not normal data; and retransmitting the packetized data in case of determining the control data being normal and the response data included in the control data being NACK, or in case of not estimating the response data included in the control data to be ACK.

According to another aspect of the present invention, there is provided a transmitting device comprising: a data receiving unit for determining normality of control data responded to transmitted packetized data; an estimation unit for estimating response data included in the control data to be acknowledgement response data (ACK) or negative acknowledgement response data (NACK) in case of determining the control data as not normal data; and a transmitting unit for retransmitting the packetized data in case of determining the control data being normal and the response data included in the control data being NACK, or in case of not estimating the response data included in the control data to be ACK.

According to an embodiment, by reducing the number of retransmissions of packetized data when the response data of ACK or NACK cannot be correctly received, the deterioration in quality of network transmission can be prevented.

Embodiments of the present invention will now be described with reference to the accompanying drawings, of which:
Fig. 1 is a diagram illustrating data transmitted between a transmitting device and a receiving device;
Fig. 2 is a diagram illustrating the state (ACK/NACK) of response data transmitted in response to transmitted data;
Fig. 3A illustrates the number of transmissions of packetized data and the state (ACK/NACK) of response data;
Fig. 3B illustrates the relationship between the number of transmissions of packetized data and an ACK response probability;
Fig. 4 is a block diagram of a transmitting device;
Fig. 5A is a diagram illustrating the format of packetized data;
Fig. 5B is a diagram illustrating the format of control data;
Fig. 6 is a block diagram of a receiving device;
Fig. 7 is a flowchart illustrating an ACK/NACK determination process;
Fig. 8 is a flowchart illustrating an ACK/NACK determination process in the related art;
Fig. 9 is a flowchart illustrating an ACK estimation process according to a first embodiment;
Fig. 10 is a flowchart illustrating an ACK estimation process according to a second embodiment;
Fig. 11 is a flowchart illustrating an ACK estimation process according to a third embodiment; and
Fig. 12 is a flowchart illustrating an ACK estimation process according to a fourth embodiment.

Embodiments will be described with reference to the accompanying drawings.

A retransmission process is as follows. A receiving device receives packetized data from a transmitting device, decodes the received data, performs retransmission synthesis processing upon the decoded data, and stores the data that has undergone the retransmission synthesis processing in a buffer included therein. In addition, the receiving device determines whether the received packetized data has been correctly decoded. If it is determined that the received packetized data has been correctly decoded, the receiving device transmits ACK to the transmitting device. On the other hand, if it is determined that the received packetized data has not been correctly decoded, the receiving device transmits NACK to the transmitting device.

The transmitting device stores the transmitted packetized data in a buffer included therein. If the transmitting device receives NACK from the receiving device, it retransmits the same packetized data to the receiving device. The above-described retransmission synthesis processing is a processing for synthesizing incorrectly received data including an error which is stored in a buffer and retransmitted data. By performing the retransmission synthesis processing, reception quality of a retransmitted signal can be improved. With increasing number of retransmissions, the level of the reception quality improvement increases. That is, the probability of correct data reception (reception probability) is increased.

In an embodiment, if the transmitting device cannot correctly receive response data from the receiving device, the transmitting device determines which of response data of ACK or NACK has been transmitted from the receiving device using information stored therein.

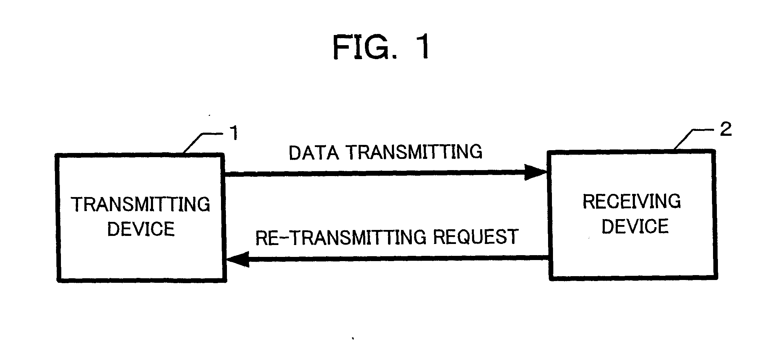

Fig. 1 shows data transmitted between a transmitting device and a receiving device. A transmitting device 1 is a mobile station device or a base station device. A receiving device 2 is a base station device or a mobile station device.

Referring to Fig. 1, the transmitting device 1 transmits packetized data. The packetized data includes an error-correction code used to determine the integrity of the data.

The receiving device 2 determines whether the packetized data has been correctly received using the error-correction code, and transmits ACK or NACK to the transmitting device 1 as the determination result. If the transmitting device 1 receives ACK, it transmits next packetized data. On the other hand, if the transmitting device 1 receives NACK, it retransmits the previously transmitted packetized data.

Here, when the transmitting device 1 cannot correctly receive the response data from the receiving device 2, a method of forcing the transmitting device 1 to retransmit the previously transmitted packetized data to the receiving device 2 is effective in preventing the incomplete transmission of data. However, the probability that the response data is NACK depends on the condition of a propagation path. Accordingly, under the circumstances in which the frequency of error occurrence is low, the probability that the response data is NACK is very low. Accordingly, when the transmitting device 1 cannot correctly receive response data from the receiving device 2, a method of causing the transmitting device 1 to estimate which of ACK and NACK has been transmitted thereto is used instead of the method of forcing the transmitting device 1 to determine that NACK has been transmitted thereto.

The estimation method will be described below.

### (1) Estimation Based on State in Temporal Proximity

Estimation is performed on the basis of the states of pieces of response data received in the temporal proximity to the incorrect reception of response data. The states are averaged so as to obtain the probability of occurrence of ACK or NACK in a propagation path. Using the obtained probability, it is estimated which of ACK and NACK has been transmitted to the transmitting device 1.

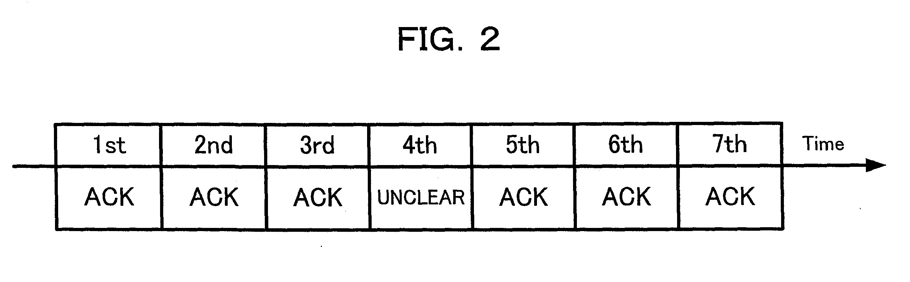

Fig. 2 shows the state (ACK or NACK) of response data transmitted in response to transmitted data, that is, the states of pieces of response data transmitted in response to pieces of packetized data transmitted in time series. The response data of ACK is transmitted in response to first, second, and third pieces of packetized data. The state (ACK or NACK) of response data transmitted in response to fourth packetized data is unclear, that is, the response data transmitted in response to the fourth packetized data cannot be correctly receives. The response data of ACK is transmitted in response to fifth, sixth, and seventh pieces of packetized data.

Here, the states of the pieces of response data transmitted in response to the first, second, third, fifth, sixth, and seventh pieces of packetized data, which are in the temporal proximity to the fourth packetized data, are ACK. The states are averaged, whereby the probability that the state of the response data transmitted in response to the fourth packetized data is NACK becomes approximately zero percent. Since this probability is very low, it can be estimated that the response data of ACK has been transmitted in response to the fourth packetized data. Accordingly, the retransmission of the fourth packetized data is not performed.

The reason why the above-described estimation can be performed is because it is unlikely that the condition of the propagation path rapidly deteriorates. The probability that only the state of the fourth response data is NACK and only the packetized data in response to the NACK cannot be correctly received is very low. Accordingly, it can be estimated that the response data of ACK has been transmitted in response to the fourth packetized data.

### (2) Estimation Based on Number of Transmissions

HARQ (Hybrid Automatic Repeat reQuest) control is one of the methods to improve communication quality. In the HARQ control, by repeatedly performing data retransmission, the reception probability is increased. Accordingly, under the various circumstances in which data retransmission is required, the numbers of retransmissions are not quite so different from each other. It is therefore estimated which of ACK and NACK has been transmitted on the basis of the number of transmissions of packetized data.

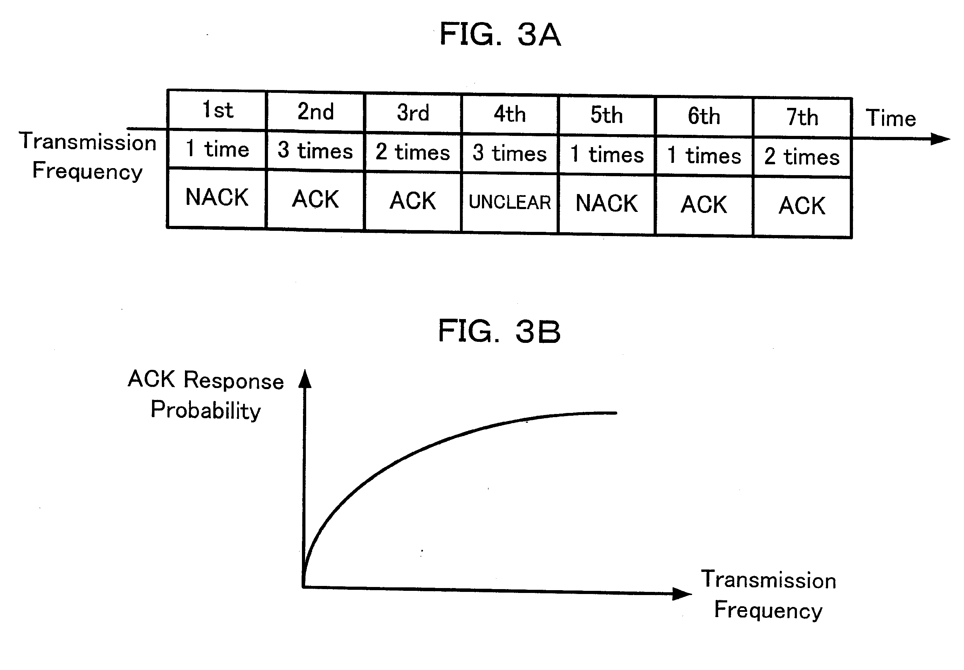

Fig. 3A shows the number of transmissions of packetized data and the state (ACK or NACK) of response data transmitted in response to the packetized data, that is, the number of transmissions of each of pieces of packetized data transmitted in time series and the state of each of pieces of response data transmitted in response to the pieces of packetized data. In the case of first packetized data, the response data of NACK is transmitted after a single transmission of the first packetized data has been performed. In the case of second packetized data, the response data of ACK is transmitted after the transmission of the second packetized data has been performed three times. In the case of fourth packetized data, the state (ACK or NACK) of response data transmitted after the transmission of the fourth packetized data has been performed three times is unclear.

Here, the average number of transmissions of packetized data in response to which the response data of ACK has been transmitted is two. The number of transmissions of packetized data in response to which the response data of NACK has been transmitted is one. Accordingly, a threshold value used for estimation is set to 1.5. As described previously, in the case of the fourth packetized data, the state (ACK or NACK) of response data transmitted after the transmission of the fourth packetized data has been performed three times is unclear. Since the number of transmissions of the fourth packetized data is three, the probability that the response data of ACK has been transmitted in response to the fourth packetized data is very high. That is, the probability that the response data of NACK has been transmitted in response to the fourth packetized data is very low. Accordingly, it can be estimated that the response data of ACK has been transmitted in response to the fourth packetized data, and the retransmission of the fourth packetized data is not therefore performed. The above-described threshold value used for estimation may be an average of the numbers of transmissions.

Fig. 3B shows the relationship between the number of transmissions of packetized data and an ACK response probability, that is, the effect of the HARQ control. The reason why the above-described estimation can be performed is because the effect of the retransmission synthesis processing, that is, the increase in the ACK response probability is increased with the increasing number of transmissions.

### (3) Estimation Based on Amount of Transmitted Data

If the large amount of data is transmitted by a certain user, or if the amount of scheduled pieces of data transmitted by all users is large, it is required to reduce the number of needless retransmissions of data. Accordingly, in this case, if response data (ACK or NACK) cannot be correctly received, it is determined that the response data of ACK has been transmitted so as to prevent the retransmission of packetized data.

This method is effective in a case in which there is a rule of the data propagation delay, and can prevent such a situation in which, due to the repeated retransmission of packetized data, the transmission of the next packetized data is delayed.

### (4) Estimation Based on Type of Transmitted Data

If transmitted packetized data is high-quality data, it is estimated that the response data of NACK has been transmitted. On the other hand, if the transmitted packetized data is not high-quality data, it is estimated that the response data of ACK has been transmitted.

More specifically, in the case of communication data such as speech information, even if a part of the communication data is dropped, the quality of the communication data can be accepted. Accordingly, it is estimated that the response data of ACK has been transmitted. In the case of communication data such as program data, the dropout of the communication data is unallowable. Accordingly, it is estimated that the response data of NACK has been transmitted.

By using the above-described methods (1) to (4) in combination, even if the response data of ACK or NACK cannot be correctly received, it can be estimated which of ACK and NACK has been transmitted unlike the case in which it is always determined that NACK has been transmitted.

For example, if response data cannot be correctly received, it is estimated whether the transmitted response data is ACK using the above-described method (1). If it cannot be estimated whether the transmitted response data is ACK using the above-described method (1), estimation is performed using the above-described method (2). If it cannot be estimated whether the transmitted response data is ACK using the above-described method (2), estimation is performed using the above-described method (3). If it cannot be estimated whether the transmitted response data is ACK using the above-described method (3), estimation is performed using the above-described method (4). If it can be estimated that the transmitted response data is ACK using any one of the above-described methods, data retransmission is not performed.

In the HARQ control, the probability that response data included in control data transmitted in response to packetized data is NACK is lower than the probability that response data included in control data transmitted in response to packetized data is ACK. The reason for this is that commonly used wireless communication devices have a correction function of changing the amount of data to be transmitted and power in accordance with the condition of a propagation path. Accordingly, the method of determining that transmitted response data is NACK when the response data cannot be correctly received is a very inefficient method.

Under the condition in which the propagation environment is good or an error can be corrected using the error correction function, data retransmission is rarely performed. In this case, the probability that received response data is NACK is very low. The probability that the transmitted response data of NACK cannot be correctly received is lower than the above-described probability. Accordingly, the probability that the response data of NACK is erroneously detected as the response data of ACK is also low.

Under the condition in which the propagation environment is adverse or an error cannot be corrected using the error correction function, the probability of occurrence of data retransmission is increased. In this case, the response data of NACK is frequently transmitted to the transmitting device. Accordingly, a situation in which it is determined without much thought that transmitted response data is ACK can be prevented. Furthermore, the probability that the response data of NACK is erroneously detected as the response data of ACK is also low.

The embodiment is particularly effective in a case in which the propagation environment deteriorates under the influence of temporary noise. There is a time difference between a time at which packetized data is transmitted and a time at which control data including response data (ACK or NACK) is transmitted. Accordingly, the temporary noise affects only one of the transmission of packetized data and the transmission of response data. If noise occurs in the transmission of packetized data, the receiving device determines that the transmitted data has been incorrectly received (NACK determination). However, the response data of NACK is correctly transmitted to the transmitting device in response to the incorrectly received data. Accordingly, the transmitting device receives the response data of NACK, and performs data retransmission.

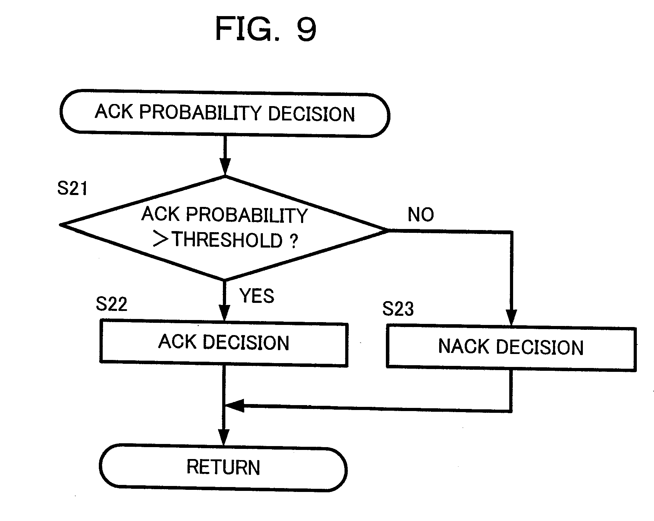

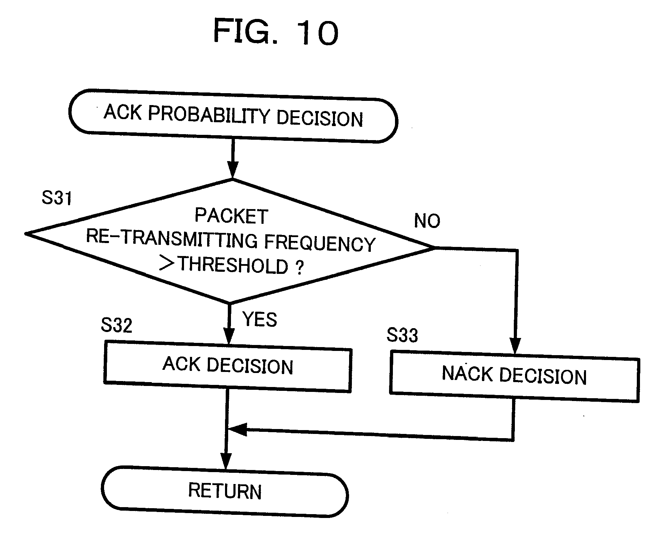

On the other hand, if noise occurs only in the control data, needless data retransmission can be prevented by estimating that the transmitted data has no error as illustrated in Fig. 9 or 10.

Thus, the embodiment is most effectively used in a case in which a communication error occurs under the influence of temporary noise. From the viewpoint of an operational environment, the embodiment is very effective in a case in which noise occurs under the influence of waves reflected from surrounding buildings while a mobile station device moves.

### Configuration of Transmitting Device

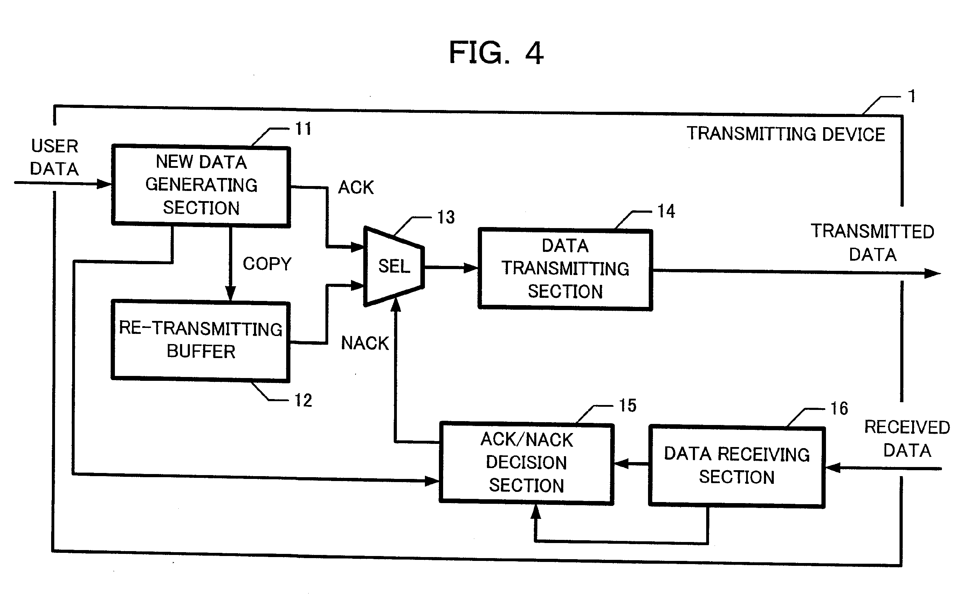

Fig. 4 shows a block diagram of a transmitting device. Referring to Fig. 4, user data to be transmitted is transmitted to a new data generating section 11 and is then stored in an internal buffer included in the new data generating section 11.

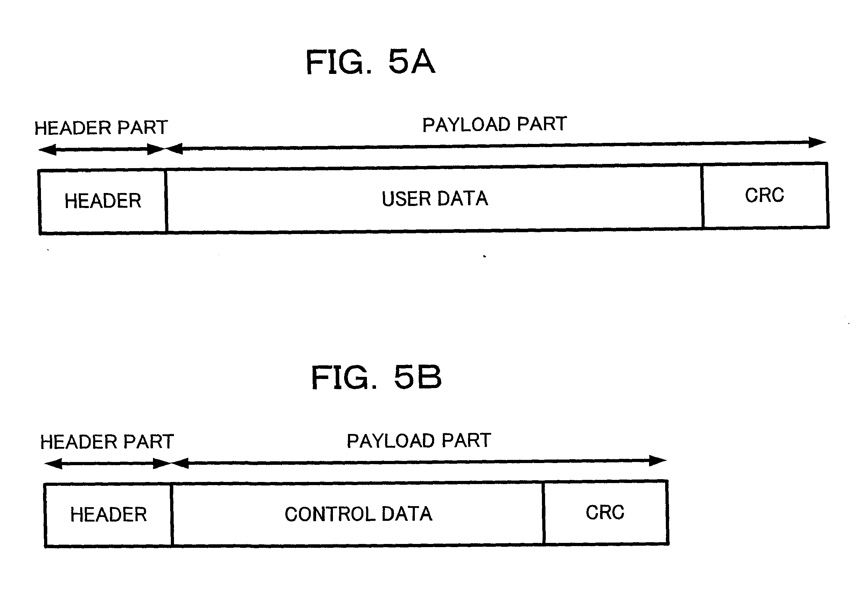

The new data generating section 11 divides the user data stored in the internal buffer into blocks, encodes a turbo code that is one of the error correction code, adds data check bits CRC, and maps them to a payload part illustrated in Fig. 5A, thereby generating a packet. This packet is stored in a re-transmitting buffer 12 as well as being transmitted to a selector 13.

The re-transmitting buffer 12 transmits the stored packet to the selector 13. The selector 13 selects one of the packet transmitted from the new data generating section 11 and the packet transmitted from the re-transmitting buffer 12 in accordance with a control signal transmitted from an ACK/NACK decision section 15, and transmits the selected packet to a data transmitting section 14. The data transmitting section 14 modulates the received packet, and transmits the modulated packet as wireless data (packetized data).

A data receiving section 16 receives wireless data (packetized data) from a receiving device, demodulates the received wireless data, and transmits the demodulated wireless data to the ACK/NACK decision section 15. The ACK/NACK decision section 15 reads response data (ACK or NACK information) from a payload part for control data transmitted from the receiving device, which is illustrated in Fig. 5B, and determines whether the read response data is ACK or NACK.

The payload part for control data includes various pieces of control data such as the ACK/NACK information and data check bits CRC for the control data. The ACK/NACK decision section 15 decodes the control data using the data check bits CRC obtained from the payload part and determines whether the control data has been correctly received.

If the ACK/NACK decision section 15 determines that the read response data (ACK/NACK information) is ACK, it controls the selector 13 so as to cause the selector 13 to select a packet transmitted from the new data generating section 11. On the other hand, if the ACK/NACK decision section 15 determines that the read response data is NACK, it controls the selector 13 so as to cause the selector 13 to select a packet transmitted from the re-transmitting buffer 12.

Furthermore, the new data generating section 11 transmits information about the data type of a packet to the ACK/NACK decision section 15, and the data receiving section 16 calculates the value of SIR (Signal to Interference Ratio) and transmits the calculated value to the ACK/NACK decision section 15.

### Configuration of Receiving Device

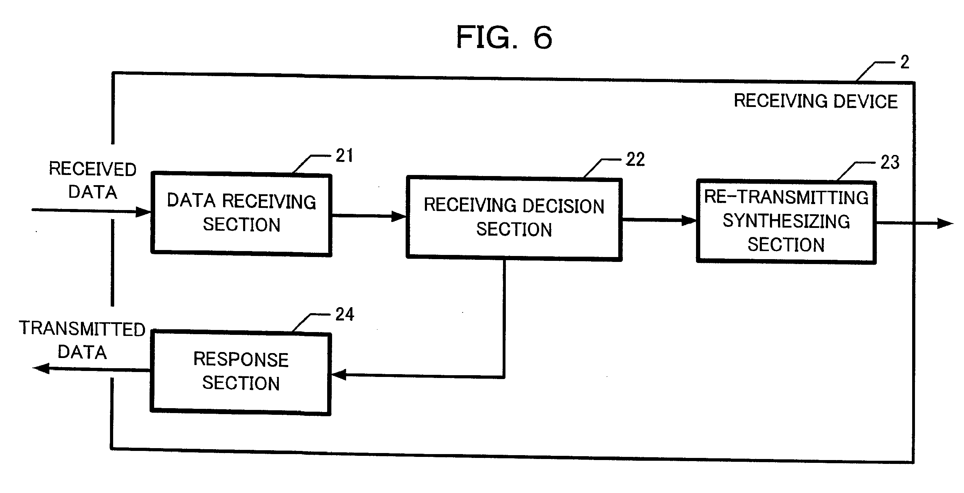

Fig. 6 shows a block diagram of a receiving device according to the embodiment. Referring to Fig. 6, a data receiving section 21 receives the wireless data (packetized data) from the transmitting device, demodulates the wireless data, and transmits the demodulated wireless data to a receiving decision section 22. The receiving decision section 22 decodes the data check bits CRC and the turbo code which are obtained from the payload part of the packet illustrated in Fig. 5A, and determines whether the user data has been correctly received on the basis of the decoding result. Subsequently, the receiving decision section 22 transmits the decoded data to a re-transmitting synthesizing section 23 in the subsequent stage, and transmits the determination result to a response section 24.

The re-transmitting synthesizing section 23 synthesizes incorrectly received packetized data including an error and retransmitted packetized data so as to improve reception quality, and transmits the synthesized packetized data to the subsequent circuit.

If the response section 24 receives from the receiving decision section 22 a determination result indicating that the user data has been correctly received (if the user data has no error or if an error included in the user data can be corrected), it generates control data including response data of ACK. On the other hand, if the response section 24 receives from the receiving decision section 22 a determination result indicating that the user data has been incorrectly received (if an error included in the user data cannot be corrected), it generates control data including response data of NACK. Subsequently, the response section 24 adds the data check bits CRC to the generated control data, and maps them to the packet for control data illustrated in Fig. 5B, modulates this packet, and transmits the modulated packet as wireless data.

### ACK/NACK Determination Process

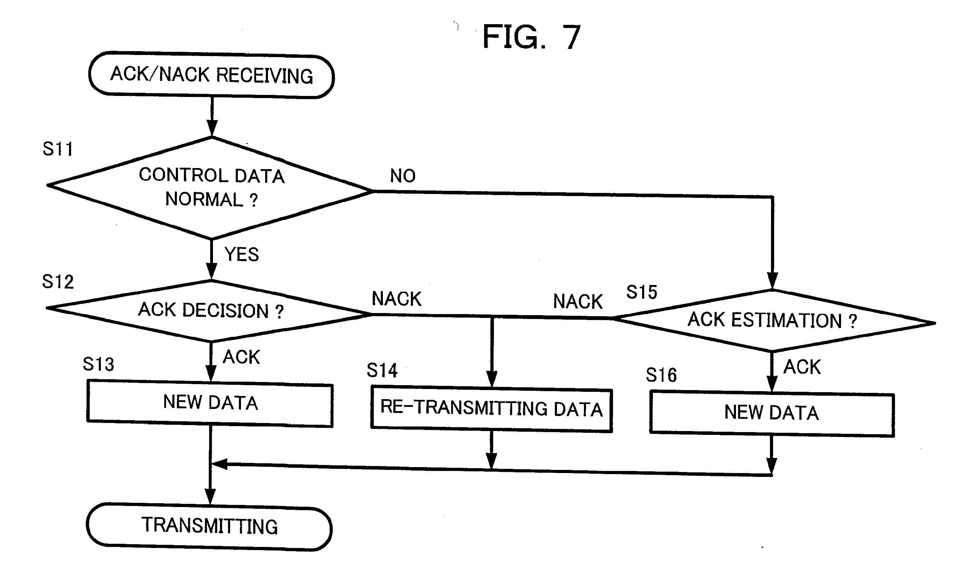

Fig. 7 shows a flowchart illustrating an ACK/NACK determination process according to the embodiment which is performed by the ACK/NACK decision section 15. Referring to Fig. 7, in step S11, it is determined whether the control data has been correctly received on the basis of the result of decoding performed using the data check bits CRC obtained from the payload part of the packet for control data. Here, if the decoding result includes no error or error correction can be performed upon the decoding result, it is determined that the control data has been correctly received. On the other hand, if error correction cannot be performed upon the decoding result, it is determined that the control data has been incorrectly received.

If it is determined that the control data has been correctly received, in step S12, it is determined whether the response data (ACK/NACK information) included in the control data is ACK. If the response data is ACK, in step S13, the selector 13 selects a packet (new data) transmitted from the new data generating section 11. If the response data is NACK, in step S14, the selector 13 selects the packet (retransmitted data) transmitted from the re-transmitting buffer 12.

On the other hand, in step S11, if it is determined that the control data has been incorrectly received, in step S15, it is estimated whether the response data included in the incorrectly received control data is ACK (ACK estimation). If the result of the ACK estimation is ACK, in step S16, the selector 13 selects a packet (new data) transmitted from the new data generating section 11. If the result of the ACK estimation is NACK, in step S14, the selector 13 selects the packet (retransmitted data) transmitted from the re-transmitting buffer 12.

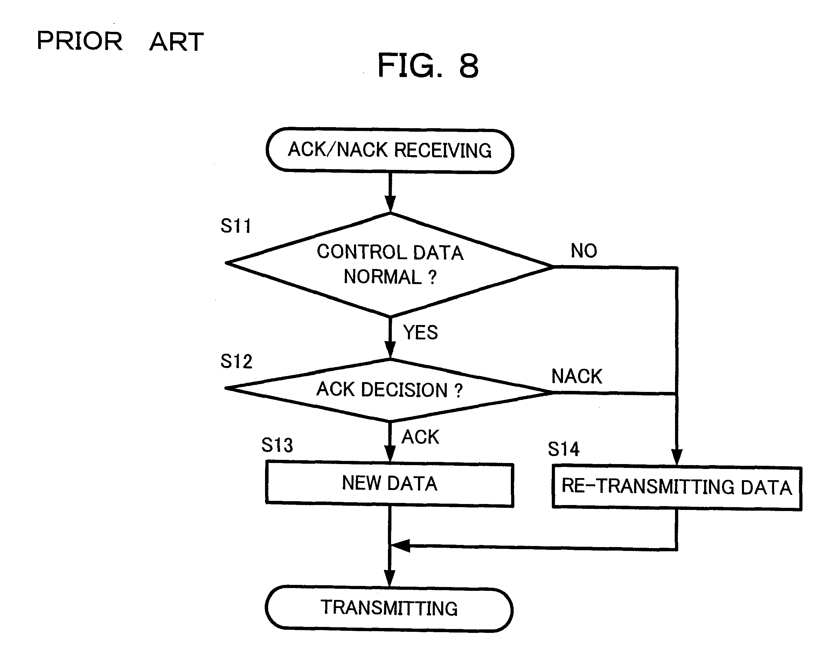

As illustrated in a flowchart in Fig. 8, if it is determined that control data has been incorrectly received, an ACK/NACK decision section in the related art determines that response data included in the incorrectly received control data is NACK. Accordingly, retransmitted data is always selected.

### ACK Estimation according to First Embodiment

Fig. 9 shows a flowchart illustrating an ACK estimation process according to the first embodiment which is performed by the ACK/NACK decision section 15. Referring to Fig. 9, in step S21, the ACK probability is calculated using the states of pieces of response data included in packets received in the temporal proximity to the incorrect reception of a packet. It is determined whether the calculated ACK probability exceeds a threshold value. The ACK probability, which has been described with reference to Fig. 2, is a probability that the response data of ACK is transmitted in response to packetized data.

If the ACK probability exceeds the threshold value, in step S22, it is estimated that the response data included in the incorrectly received packet for control data is ACK. On the other hand, if the ACK probability is equal to or smaller than the threshold value, in step S23, it is estimated that the response data included in the incorrectly received packet for control data is NACK.

This threshold value is set to a fixed value (for example, 80%) capable of ensuring good communications. The threshold value may be changed in accordance with a propagation environment indicated by SIR or the like transmitted from the data receiving section 16. In this case, the change in the ACK probability is required to be monitored. If the ACK probability increases from a low value to a high value, the threshold value is set to a lower value so as to allow the ACK/NACK decision section 15 to determine that the response data included in the incorrectly received packet for control data is ACK even if the ACK probability is low.

### ACK Estimation according to Second Embodiment

Fig. 10 shows a flowchart illustrating an ACK estimation process according to the second embodiment which is performed by the ACK/NACK decision section 15.
Referring to Fig. 10, in step S31, it is determined whether the number of transmissions of the packet (packet transmission number) in response to which the control data has been incorrectly transmitted exceeds a threshold value. The threshold value is obtained on the basis of an average of the numbers of transmissions of packets in the temporal proximity to the packet in response to which the control data has been incorrectly transmitted.

If the packet transmission number exceeds the threshold value, in step S32, it is estimated that the response data included in the incorrectly received control data is ACK. On the other hand, if the packet transmission number is equal to or smaller than the threshold value, in step S33, it is estimated that the response data included in the incorrectly received control data is NACK. In this case, the threshold value may be a fixed value capable of ensuring good communications instead of the average of the numbers of transmissions of packets in the temporal proximity to the packet in response to which the control data has been incorrectly transmitted.

For example, it is assumed that average of the numbers of transmissions of packets in the temporal proximity to the packet in response to which the control data has been incorrectly transmitted is three. If the number of transmissions of a packet for which the ACK estimation will be performed is equal to or smaller than the threshold value of three, it is determined that the response data included in the incorrectly received control data is NACK. If the number of transmissions of a packet for which the ACK estimation will be performed exceeds the threshold value of three, it is determined that the response data included in the incorrectly received control data is ACK. The average value is always changed in accordance with a propagation environment. Accordingly, the threshold value may be changed by monitoring the change in the propagation environment. In this case, if the number of transmissions of each of the packets in the temporal proximity to the packet in response to which the control data has been incorrectly transmitted decreases from a large value to a small value, the threshold value is set to a value lower than the average so as to allow the ACK/NACK decision section 15 to determine that the response data included in the incorrectly received control data is ACK even if the number of transmissions of the packet for which the ACK estimation will be performed is small.

### ACK Estimation according to Third Embodiment

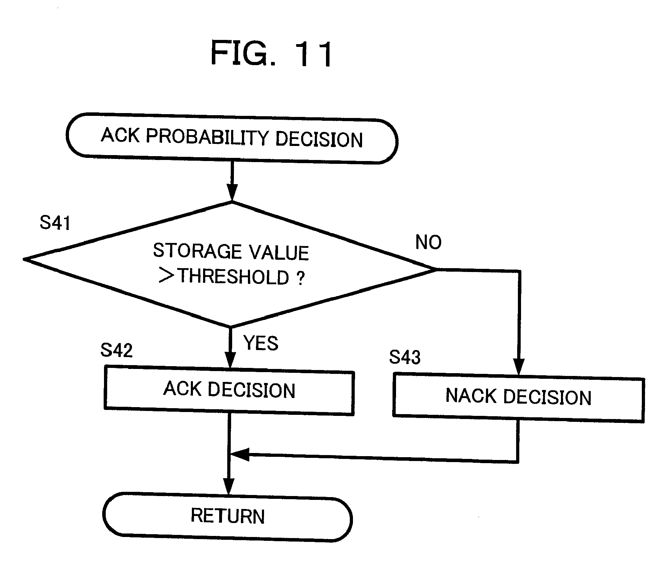

Fig. 11 shows a flowchart illustrating an ACK estimation process according to the third embodiment which is performed by the ACK/NACK decision section 15.
Referring to Fig. 11, in step S41, it is determined whether the storage value of user data stored in the internal buffer included in the new data generating section 11 exceeds a threshold value that is, for example, the maximum storage value of 90%.

If the storage value exceeds the threshold value, in step S42, it is estimated that the response data included in the incorrectly received control data is ACK. On the other hand, if the storage value is equal to or smaller than the threshold value, in step S43, it is estimated that the response data included in the incorrectly received control data is NACK.

In this case, the threshold value may be a value that is changed in accordance with the change in the storage value instead of the fixed value of 90% that is the maximum storage value of the internal buffer. For example, if the propagation environment is improved, it can be estimated that the large amount of data can be transmitted and the buffer overflow will not occur. Accordingly, for example, the threshold value is increased from 90% to 95%.

### ACK Estimation according to Fourth Embodiment

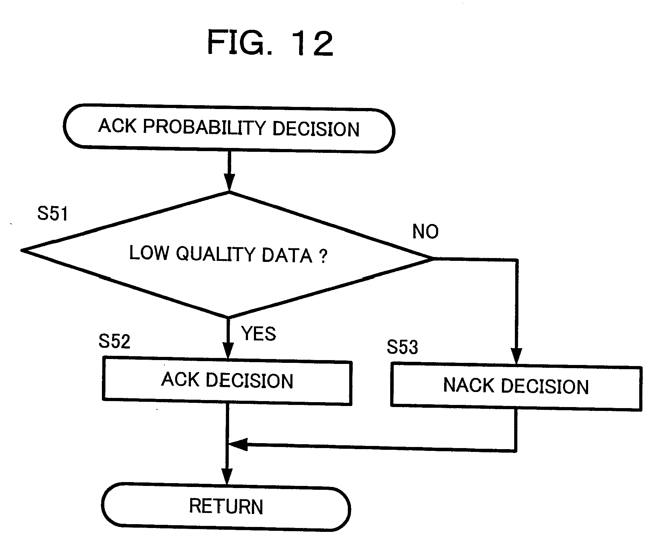

Fig. 12 shows a flowchart illustrating an ACK estimation process according to the fourth embodiment which is performed by the ACK/NACK decision section 15.
Referring to Fig. 12, in step S51, it is determined whether the type of the packetized data in response to which the control data has been incorrectly received is low-quality data such as speech data or high-quality data such as program data. For example, the data type determination can be performed by referring to a service type included in an IP header.

If the type of the packetized data in response to which the control data has been incorrectly received is low-quality data, in step S52, it is estimated that the response data included in the incorrectly received control data is ACK. On the other hand, if the type of the packetized data in response to which the control data has been incorrectly received is high-quality data, in step S43, it is estimated that the response data included in the incorrectly received control data is NACK.

In the above-described embodiments, step S11 is used as an example of control data determining means, and step S15 is used as an example of estimating means.

## Claims

1. A retransmission control method comprising of the steps of:
determining normality of control data responded to transmitted packetized data;
estimating response data included in the control data to be acknowledgement response data (ACK) or negative acknowledgement response data (NACK) in case of determining the control data as not normal data; and
retransmitting the packetized data in case of determining the control data being normal and the response data included in the control data being NACK, or in case of not estimating the response data included in the control data to be ACK.

2. A transmitting device (1) comprising:
a data receiving unit (16) for determining normality of control data responded to transmitted packetized data;
an estimation unit (15) for estimating response data included in the control data to be ACK or NACK in case of determining the control data as not normal data; and
a transmitting unit (14) for retransmitting the packetized data in case of determining the control data being normal and the response data included in the control data being NACK, or in case of not estimating the response data included in the control data to be ACK.

3. The transmitting device (1) according to claim 2,
wherein the estimation unit (15) obtains a probability that the response data included in the control data determined as not the normal data is ACK on the basis of pieces of response data included in pieces of control data that have been correctly received in temporal proximity to reception of the control data determined as not the normal data, and estimates that the response data included in the control data determined not to be normal data is ACK when the probability exceeds a predetermined threshold value.

4. The transmitting device (1) according to claim 2,
wherein the estimation unit (15) estimates that the response data included in the control data determined not to be normal data is ACK when the number of transmissions of the packetized data corresponding to the control data determined not to be normal data exceeds a predetermined threshold value.

5. The transmitting device (1) according to claim 4,
wherein the threshold value is an average of the numbers of transmissions of pieces of packetized data corresponding to the pieces of control data that have been correctly received in temporal proximity to reception of the control data determined not to be normal data.

6. The transmitting device (1) according to any of claims 2 to 5,
wherein the estimation unit (15) estimates that the response data included in the control data determined not to be normal data is ACK when an amount of stored transmitting data exceeds a predetermined threshold value.

7. The transmitting device (1) according to any of claims 2 to 5,
wherein the estimation unit (15) estimates that the response data included in the control data determined not to be normal data is ACK on the basis of a type of transmitting packetized data corresponding to the control data determined not to be normal data.

8. The transmitting device (1) according to any of claims 3 to 6,
wherein the estimation unit (15) changes the threshold value in accordance with a propagation environment.
